# EUROPÄISCHE PATENTSCHRIFT

(11) **EP 1 870 199 B1**
(45) Veröffentlichungstag und Bekanntmachung des Hinweises auf die Patenterteilung: **24.12.2008**
(21) Anmeldenummer: 07012221.3
(22) Anmeldetag: 22.06.2007
(51) Int. Cl.: B23Q 1/54

(54) **Mehrachsendrehkopf für eine Werkzeugmaschine**
Multi-axis pivot head for a machine tool
Tête rotative à axes multiples pour machine-outil

(30) Priorität: 23.06.2006 DE 102006029315
(43) Veröffentlichungstag der Anmeldung: 26.12.2007
(73) Patentinhaber: Franz Kessler GmbH, 88422 Bad Buchau (DE)
(72) Erfinder: Rondé, Uwe, 88422 Bad Buchau (DE); Trolliet, Patrick, 88361 Altshausen (DE); Hoß, Dietmar, 89597 Munderkingen (DE)
(74) Vertreter: Eisele, Otten, Roth & Dobler

(56) Entgegenhaltungen:
- EP-B1- 0 885 081
- JP-A- 1 222 809

## Beschreibung

Die Erfindung betrifft einen Mehrachsendrehkopf für eine Werkzeugmaschine nach dem Oberbegriff des Anspruchs 1.

### Stand der Technik

Ein Mehrachsendrehkopf, bei dem eine Motorspindel um zwei Achsen drehbar in einer Gabel angeordnet ist, ist beispielsweise aus der Druckschrift EP 0 885 081 B1 bekannt.

Bei einem bekannten Mehrachsendrehkopf wird die Motorspindel zwischen zwei Gabelarmen angeordnet, in denen zwei Antriebsmotoren beidseitig der Motorspindel für deren Drehbewegung angeordnet sind. Für die Unterbringung der Antriebsmotoren, die als Torquemotoren für einen Direktantrieb ausgelegt sind, sind in der bekannten Ausführung zylindrische Hohlräume in den Gabelarmen vorgesehen, so dass der zylindrische Stator unmittelbar im zylindrischen Hohlgehäuse eines Gabelarms fixiert werden kann. Die Gabelarme sind durch die geschlossene, zylindrische Wandung des Hohlraums sehr massiv und entsprechend schwer ausgeführt. Etwaige Zusatzeinheiten, z.B. eine Kühleinheit für den Stator, müssen dabei in diese zylindrische Hohlform mitintegriert werden.

Dabei bildet die Innenwand des Hohlraums in bekannten Mehrachsendrehköpfen die Außenwand des Stators bzw. einer zugehörigen Kühleinrichtung und muss daher bei der Montage des Stators im Gabelarm auch entsprechend abgedichtet werden. Hieraus resultiert die Gefahr einer mangelhaften Abdichtung.

Im Wartungs- bzw. Reparaturfall ist ein in einem solchen zylindrischen Hohlraum montierter Motor nur in Einzelteilen und damit mit großem Aufwand demontierbar.

Die Anschlüsse für den Motor sowie für etwaige Zusatzkomponenten z.B. für ein Kühlmedium können dabei nur in axialer Richtung an der Stirnseite der zylindrischen Hohlform erfolgen.

Aufgabe der Erfindung ist es, einen Mehrachsendrehkopf vorzuschlagen, bei dem die Montage und/oder Demontage, der Statoreinheit erleichtert ist.

Diese Aufgabe wird ausgehend von einem Mehrachsendrehkopf gemäß dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßer Mehrachsendrehkopf dadurch aus, dass eine separat vom Gabelarm montierbare, in einen Teil des Hohlraums eines Gabelarms einsetzbare Statoreinheit des Motors für den Drehantrieb um die zweite Achse vorgesehen ist, wobei der Hohlraum des Gabelarms so geformt ist, dass die Statoreinheit an wenigstens einem Teil ihrer umfangseitigen Mantelfläche über den neben der Statoreinheit befindlichen freien Teilbereich des Hohlraums her zugänglich ist.

In einer solchen Ausführungsform kann die Statoreinheit mit allen vorgesehenen Komponenten, beispielsweise einer Kühleinheit sowie den verschiedenen, erforderlichen elektrischen oder fluidführenden Anschlüssen vormontiert und anschließend in den Gabelarm eingesetzt werden.

Dadurch, dass die Statoreinheit als vormontierbare Einheit vorgesehen wird, kann der Hohlraum der Gabel, in den die Statoreinheit eingesetzt wird, von einer Zylinderform abweichend gestaltet werden. Dadurch wiederum wird die Statoreinheit wenigstens über einen Teil ihrer Mantelfläche von außen her zugänglich, so dass in diesem Bereich der Mantelfläche Anschlüsse oder Zusatzkomponenten untergebracht werden können, die eine beliebige Außenkontur aufweisen. Derartige Zusatzkomponten können beispielsweise Sensoren, insbesondere Temperaturfühler, Winkelmesser oder dergleichen sein. Der unmittelbar an die Statoreinheit angrenzende Bereich des Hohlraums des Gabelarms kann darüber hinaus für die Führung elektrischer Leitungen oder fluidführender Leitungen genutzt werden.

Der Gesamtaufbau eines solchen Mehrachsendrehkopf ist durch die erfindungsgemäße, leichtere und kompakte Gabelbauweise ebenfalls kompakter und leichter zu gestalten.

Darüber hinaus ist im Wartungs- oder Reparaturfall die Statoreinheit als Ganzes vom Gabelarm demontierbar, wodurch die Handhabung und damit der Montageaufwand erheblich vereinfacht wird.

In einer vorteilhaften Weiterführung der Erfindung wird die Statoreinheit mit einem vom Gabelarm separat ausgebildeten Gehäuse versehen. Ein solches Gehäuse kann vormontiert staubund fluiddicht ausgeführt und bereits außerhalb des Gabelarms geprüft werden. Darüber hinaus können die Durchführungen für die Anschlüsse entsprechend staub- und fluiddicht im Gehäuse der vormontierten Statoreinheit vorgesehen und geprüft werden.

Auch die Flexibilität bei Verwendung unterschiedlicher Motortypen oder unterschiedlicher Zusatzkomponenten wird bei einer erfindungsgemäßen Ausführung eines Mehrachsendrehkopfs verbessert, da ohne weiteres auch unterschiedlich dimensionierte Statoreinheiten in den Gabelarm einsetzbar sind.

Dabei sind lediglich die Fixierungselemente der Statoreinheit an die entsprechenden Fixierelemente im Gabelarm anzupassen. Gegebenenfalls können im Gabelarm auch unterschiedlich angeordnete oder unterschiedlich ausgebildete Fixierelemente für unterschiedliche Statoreinheiten vorgesehen werden.

In einer bevorzugten Ausführungsform wird die Statoreinheit mit einem Teil ihrer Außenfläche an eine passende Fügefläche des Gabelarms anfügbar ausgebildet. Hierdurch wird die Positionierung der Statoreinheit im Gabelarm erleichtert.

Es sind jedoch auch andere Positionierungshilfen, beispielsweise Passstifte oder dergleichen denkbar, um die positionsgetreue Montage der Statoreinheit im Gabelarm zu ermöglichen.

Derartige Positionierungshilfen können auch Führungsfunktionen haben, so dass der Stator nicht erst in seiner Endposition, sondern bereits beim Aufsetzen auf den in der Gabel gelagerten Rotor zentrisch zum Rotor geführt wird.

Um die Statoreinheit zuverlässig im Gabelarm zu fixieren wird vorteilhafterweise ein Verbindungsflansch an der Statoreinheit vorgesehen. Mit Hilfe eines solchen Verbindungsflansches kann die Statoreinheit lösbar am Gabelarm befestigt, beispielsweise verschraubt werden.

Vorzugsweise wird in dem Hohlraum zur Aufnahme der Statoreinheit eine axiale Anschlagfläche für den Anschlag der Statoreinheit in axialer Richtung vorgesehen. Ein an dieser Anschlagfläche anstoßender Gegenanschlag kann an der Statoreinheit durch die innere Stirnseite oder aber auch durch den Montageflansch, durch Distanzbolzen oder dergleichen gebildet werden. Ein solcher Anschlag bietet die Gewähr einer zuverlässigen axialen Positionierung der Statoreinheit während der Montage.

Anstelle von Distanzbolzen können beispielsweise auch stegförmige Elemente verwendet werden, die einerseits am Gabelarm befestigt, beispielsweise verschraubt, werden und andererseits einen Anschlag in axialer Richtung für den Montageflansch bilden.

An solchen am Gabelarm befestigten Elementen kann im übrigen auch der Montageflansch der Statoreinheit befestigt, bzw. verschraubt und so mit dem Gabelarm verbunden werden.

Derartige Anschlag- und/oder Befestigungselemente zwischen Montageflansch und Gabelarm können wie oben angeführt z.B. als Distanzbolzen oder stegförmige Elemente ausgebildet werden. Im Fall stegförmiger Elemente werden diese bevorzugt in ihrer Form an die Außenform des Stators angepasst, so dass der freie Hohlraum des Gabelarms möglichst wenig durch derartige Anschlag- und/oder Befestigungselemente beeinträchtigt wird.

In einer besonderen Ausführungsform der Erfindung weist der Hohlraum des Gabelarms zur Aufnahme der Statoreinheit eine Abstufung zum Formschluss mit den Fixierungsmitteln der Statoreinheit auf. Eine solche Abstufung kann beispielsweise zum Anfügen eines Verbindungsflansches wie oben angeführt ausgebildet werden.

Die Wandung des Gabelarms zwischen dem Hohlraum zur Aufnahme des Stators und dem Zwischenraum der Gabel für die Motorspindel wird vorzugsweise mit einem Durchlass und einem Lagersitz für die Rotorwelle versehen, damit sich der Rotor in den Zwischenraum der Gabel zur Motorspindel hin erstrecken kann.

Der erfindungsgemäß weitgehend offene Hohlraum der Gabel des Mehrachsendrehkopfs wird vorzugsweise seitlich mit einer Abdeckplatte verschlossen, so dass die neben der Statoreinheit im Hohlraum der Gabel untergebrachten Bauelemente und/oder Leitungen geschützt sind. Darüber hinaus ergibt sich dadurch eine entsprechend verbesserte Außenansicht der Gabel durch die Abdeckplatte.

Weiterhin kann eine solche seitliche Abdeckplatte als Aussteifungselement ausgebildet werden, um die Gabelarme des Mehrachsendrehkopfs zu versteifen. Die Abdeckplatte kann somit zu einer Materialersparnis im Bereich des Gabelarms genutzt werden.

In einer weiteren vorteilhaften Ausführungsform der Erfindung werden im Hohlraum neben der Statoreinheit Versteifungselemente, beispielsweise Versteifungsstege angebracht, die die Steifigkeit des Gabelarms verbessern. Gegebenenfalls sind derartige Versteifungselemente mit Durchlässen oder Ausnehmungen für Zusatzkomponenten oder Leitungen zu versehen.

In einer weiteren vorteilhaften Ausführungsform der Erfindung wird zudem der Montageflansch mit einer Ausnehmung versehen. Hierdurch ist die Statoreinheit im Bereich dieser Ausnehmung auch stirnseitig zugänglich. Darüber hinaus können etwaige Anschlussleitungen, beispielsweise elektrische Leitungen oder fluidführende Leitungen auch im Bereich dieser Flanschausnehmung in radialer Richtung in den erfindungsgemäßen Hohlraum des Gabelarms geführt werden.

Die Ausnehmung des Montageflansches wird bevorzugt mit einem Verschlussteil verschlossen, das nach Möglichkeit pass genau in die Ausnehmung passt.

Weiterhin ist es von Vorteil, die Ausnehmung bis in den Bereich des Rotors auszubilden, so dass beim Öffnen dieser Flanschausnehmung eine stirnseitige Einsichtnahme bis hin zum Rotor möglich ist.

Ein Ausführungsbeispiel der Erfindung ist in der Zeichnung dargestellt die wir anhand der Figuren nachfolgend näher erläutern.

Im einzelnen zeigen
- Figur 1: eine Schnittdarstellung durch eine Gabel eines erfindungsgemäßen Mehrachsendrehkopf
- Figur 2: eine perspektivische Darstellung einer Gabel eines Mehrachsendrehkopfs gemäß Figur 1,
- Figur 3: eine Seitenansicht einer Gabel eines Mehrachsendrehkopfs gemäß Figur 1,
- Figur 4: eine Detailvergrößerung aus Figur 1,
- Figur 5: eine perspektivische Darstellung eines erfindungsgemäßen Mehrachsendrehkopf, wobei ein Gabelarm geöffnet und ohne Statoreinheit dargestellt ist und
- Figur 6: eine perspektivische Darstellung entsprechend Figur 5 mit eingesetzter Statoreinheit.

Der Mehrachsendrehkopf 1 gemäß den Figuren ist nur teilweise im Bereich einer Gabel 2 dargestellt. Die Gabel 2 ist im Mehrachsendrehkopf 1 auf nicht näher dargestellte Weise um eine erste Drehachse D1 drehbar angeordnet.

Die Gabel 2 umfasst zwei Gabelarme 3, 4, zwischen denen ein Zwischenraum 5 ausgebildet ist. Im Zwischenraum 5 ist eine Motorspindel 6 schwenkbar um eine zweite Drehachse D2 angeordnet.

Durch Drehungen um die beiden Drehachsen D1 und D2 kann ein nicht näher dargestelltes, an der Motorspindel 6 befestigtes Werkzeug an nahezu beliebigen, insbesondere auch gekrümmten Oberflächen gesteuert vorbeigeführt werden. Für das Arbeiten unter hoher mechanischer Belastung, insbesondere bei großem Materialabtrag kann dabei zusätzlich ein nicht näher dargestelltes Spann- bzw. Bremssystem vorgesehen werden, um die Motorspindel in einer bestimmten Position mechanisch zu verspannen. Die Ansteuerung eines solchen Spann- bzw. Bremssystems kann beispielsweise hydraulisch, elektrisch oder auf andere Weise erfolgen.

Die beiden Gabelarme 3, 4 sind an Ihrer Außenseite jeweils mit einem Hohlraum 7 versehen, in den eine Statoreinheit 8 eingesetzt und dort befestigt ist.

Im oberen Bereich ist die Mantelfläche 9 über den Hohlraum 7 frei zugänglich. Im unteren Bereich fügt sich die Mantelfläche 9 an eine korrespondierende Fügefläche 10 der Wandung des Hohlraums 7 an.

Die Statoreinheit 8 wird über einen Flansch 11, der am Statorgehäuse 12 angebracht ist, am Gabelarm 3 befestigt, dass heißt in der vorliegenden Ausführungsform verschraubt. Hierzu sind in dem freizugänglichen Bereich der Mantelfläche 9 Distanzbolzen 13 vorgesehen, die einerseits in den Gabelarm 3, 4 eingeschraubt und andererseits mit dem Flansch 11 verschraubt werden.

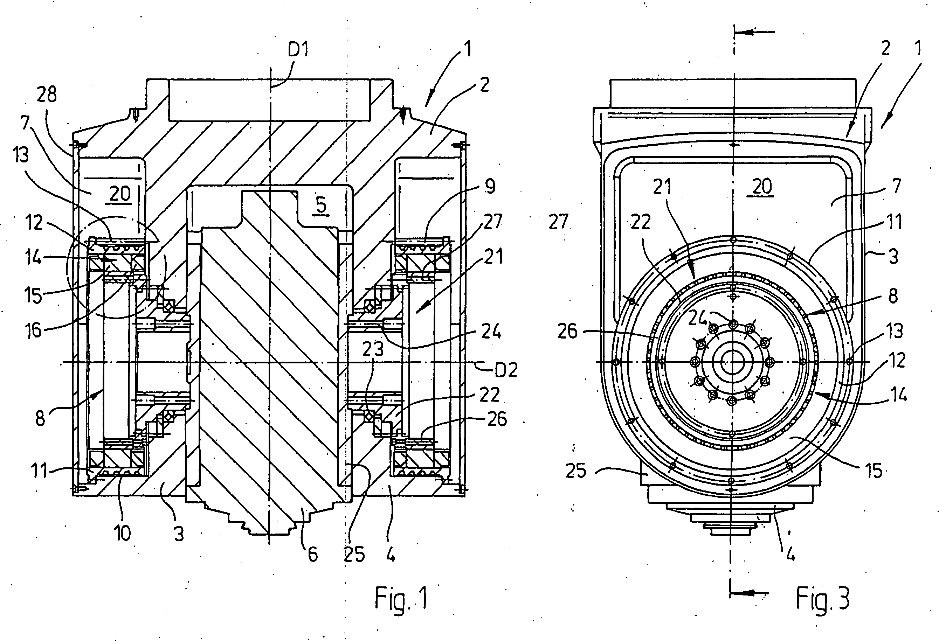

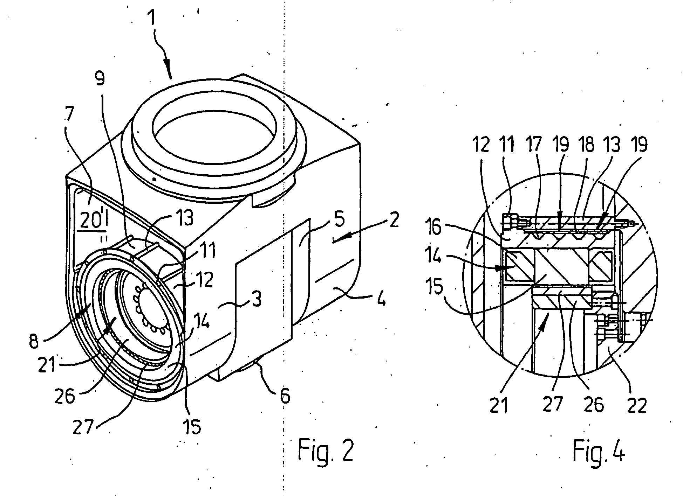

Innerhalb des Statorgehäuse 12 befindet sich ein Stator 14 dessen Blechpaket 15 und Spulen 16 in der Darstellung gemäß Figur 1 bzw. Figur 4 angedeutet sind.

Das Statorgehäuse 12 ist mit äußeren Rillen 17 versehen, die mit einer Abdeckung 18 verschlossen sind. Die Rillen 17 dienen als Kühlkanäle für ein Kühlmedium. Die Abdeckung 18 ist fest mit Statorgehäuse 12 verbunden, beispielsweise verschweißt. Die Statoreinheit 8 in der dargestellten Ausführung umfasst somit das Statorgehäuse 12, den Flansch 11, den Stator 14 mit Blechpaket 15 und Spulen 16 sowie den aus den Rillen 17 und Abdeckung 18 bestehende Kühlmantel 19.

Der Kühlmantel 19 kann dabei auf nicht näher dargestellte Weise an Leitungen für das Kühlmedium angeschlossen werden, die sich im oberen freien Teilbereich 20 des Hohlraums 7 befinden. Insbesondere ist der Kühlmantel 19 von der Mantelfläche 9 aus zugänglich.

Weitere Komponenten, beispielsweise Sensoren, elektrische Anschlüsse, elektronische Komponenten oder beispielsweise Steuereinheiten oder dergleichen können ebenfalls im freien Teilbereich 20 untergebracht und bei Bedarf an der Statoreinheit 8 vormontiert werden.

In der dargestellten Ausführungsform ist zudem auch der Rotor 21 erkennbar. Der Rotor 21 umfasst einen hohlförmigen Rotorträger 22, der die Drehwelle für die Motorspindel 6 bildet und die Gabelarme 3, 4 konzentrisch um die Drehachse D2 durchsetzt. Der Rotorträger 22 ist über ein Kugellager 23 drehbar gelagert und mittels nicht eingezeichneter Befestigungsschrauben in den Schraubenbohrungen 24 mit einer Spindelaufnahme 25 verbunden, in dem die Motorspindel 6 auf herkömmliche Weise fixiert ist.

An der Außenseite ist eine Rotorhülse 26 mit dem Rotorträger 22 verbunden, im vorliegenden Fall verschraubt. Die Rotorhülse 26 trägt Permanentmagnete 27, so dass sich in Verbindung mit dem Stator 14 ein permanenterregter Synchronmotor bzw. ein sogenannter Torquemotor für den Direktantrieb der Motorspindel um die Drehachse D2 ergibt.

Der Hohlraum 7 wird mit einer Abdeckung 28 verschlossen, die beispielsweise am Gabelarm 3, 4 verschraubt wird. Durch die Abdeckung 28 wird der Hohlraum 7 vor Verschmutzung und Feuchtigkeit geschützt. Darüber hinaus kann die Abdeckung 28 auch zur Versteifung der Gabelarme 3, 4 dienen.

Die dargestellte Ausführungsform ist spiegelsymmetrisch aufgebaut, so dass beide Gabelarme 3, 4 sowie die darin eingesetzten Statoreinheiten 8 identisch und lediglich spiegelverkehrt ausgeführt sind.

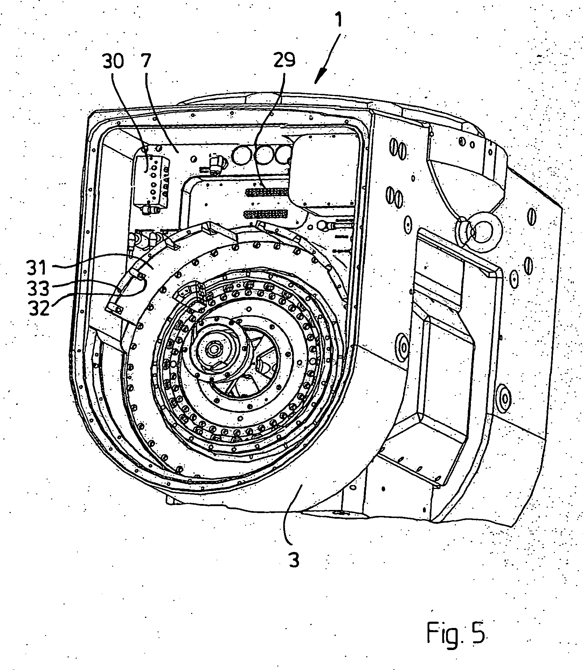

Der Mehrachsendrehkopf 1 gemäß Figur 5 entspricht im wesentlichen dem vorbeschriebenen Ausführungsbeispiel. In dieser Darstellung ist erkennbar, dass im Hohlraum 7 Anschlusselemente für verschiedenen Verbindungsleitungen, beispielsweise elektrische Anschlussleisten 29 und Anschlusselemente 30 für fluidführende Leitungen untergebracht sind.

In dieser Ausführungsform sind gebogene stegförmige Befestigungselemente 31 über Befestigungsschrauben 32 mit dem Gabelarm 3 verbunden. Über Gewindebohrungen 33 kann ein in der Darstellung gemäß Figur 5 nicht dargestellter Montageflansch 34 einer Statoreinheit über das Befestigungselement 31 mit dem Gabelarm 3 verbunden werden.

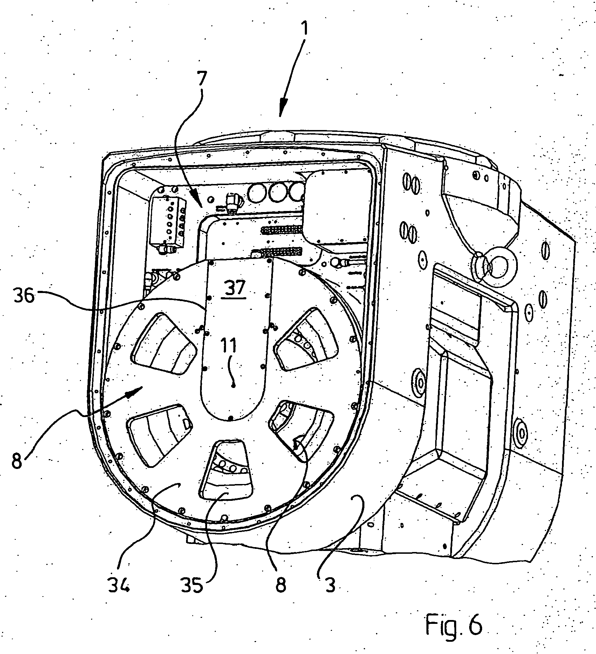

Figur 6 entspricht der Darstellung gemäß Figur 5, wobei nunmehr eine Statoreinheit 8 in den Gabelarm 3 eingesetzt ist. Der Montageflansch 34 gemäß dieser Ausführungsform ist mit Sichtöffnungen 35 versehen, die zugleich die Masse des Montageflansches 34 verringern.

Eine radial verlaufende Ausnehmung 36 des Montageflansches 34 erstreckt sich bis über den Mittelpunkt M der Statoreinheit 8 hinaus und ist über eine Verschlussplatte 37, die genau in die Ausnehmung 36 passt, abgedeckt. Durch diese Verschlussplatte 37 besteht die Möglichkeit, die Statoreinheit 8 auch stirnseitig zugänglich zu machen, indem diese Verschlussplatte 37 entfernt wird. Auch eine Einblicknahme in den Bereich des Rotors ist hierdurch möglich. Zudem können aus der Statoreinheit 8 austretende Anschlussleitungen im Bereich der Ausnehmung 36 in radialer Richtung in den Hohlraum geführt werden, von dem aus die Statoreinheit 8 in radialer Richtung zugänglich ist.

Die Erfindung ist nicht auf die beschriebene Ausführungsbeispiele beschränkt. Viele weitere Varianten und Weiterbildungen sind unter Nutzung der Erfindung denkbar. Wesentlich ist der Umstand das eine separat montierbare Statoreinheit 8 vorgesehen ist, die als ganze Einheit in den Hohlraum 7 einsetzbar ist, wobei die Statoreinheit 8 über den freien Teilbereich 20 des Hohlraums 7 von der Außenseite bzw. von der Mantelfläche 9 her zugänglich ist.

### Bezugszeichenliste:

- 1: Mehrachsendrehkopf
- 2: Gabel
- 3: Gabelarm
- 4: Gabelarm
- 5: Zwischenraum
- 6: Motorspindel
- 7: Hohlraum
- 8: Statoreinheit
- 9: Mantelfläche
- 10: Fügefläche
- 11: Flansch
- 12: Statorgehäuse
- 13: Distanzbolzen
- 14: Stator
- 15: Blechpaket
- 16: Spulen
- 17: Rillen
- 18: Abdeckung
- 19: Kühlmantel
- 20: freier Teilbereich
- 21: Rotor
- 22: Rotorträger
- 23: Kugellager
- 24: Schraubenbohrung
- 25: Spindelaufnahme
- 26: Rotorhülse
- 27: Permanentmagnete
- 28: Abdeckung
- 29: Anschlussleitung
- 30: Anschlusselement
- 31: Befestigungselement
- 32: Befestigungsschraube
- 33: Gewindebohrung
- 34: Montageflansch
- 35: Sichtöffnung
- 36: Ausnehmung
- 37: Verschlussplatte

## Patentansprüche

1. Mehrachsendrehkopf für eine Werkzeugmaschine mit einer Gabel (2), die drehbar um eine erste Achse (D1) angeordnet ist und zwei Gabelarme (3, 4) aufweist, zwischen denen eine Motorspindel (6) drehbar um eine zweite Achse (D2) angeordnet ist, wobei wenigstens ein Motor für den Drehantrieb der Motorspindel (6) um die zweite Achse (D2) in der Gabel vorgesehen ist und wenigstens ein Gabelarm (3) einen Hohlraum (7) zur Aufnahme des Motors aufweist, **dadurch gekennzeichnet, dass** eine separat von dem Gabelarmen (3, 4) montierbare, in einen Teil des Hohlraums (7) einsetzbare Statoreinheit (8) des Motors für den Drehantrieb um die zweite Achse (D2) vorgesehen ist, wobei der Hohlraum (7) des Gabelarms (3) so geformt ist, dass die Statoreinheit (8) an wenigstens einem Teil ihrer umfangseitigen Mantelfläche (9) über den neben der Statoreinheit (8) befindlichen freien Teilbereich (20) des Hohlraums (7) her zugänglich ist.

2. Mehrachsendrehkopf nach Anspruch 1 **dadurch gekennzeichnet, dass** die Statoreinheit (8) ein vom Gabelarm (3) separates Gehäuse (12) aufweist.

3. Mehrachsendrehkopf nach einem der vorgenannten Ansprüche **dadurch gekennzeichnet, dass** die Statoreinheit (8) am Außenumfang eine Fügefläche (10) zum Anfügen an eine korrespondierende Fläche der Hohlraumwand aufweist.

4. Mehrachsendrehkopf nach einem der vorgenannten Ansprüche **dadurch gekennzeichnet, dass** die Statoreinheit (8) wenigstens ein Kühlelement (19) umfasst.

5. Mehrachsendrehkopf nach einem der vorgenannten Ansprüche **dadurch gekennzeichnet, dass** die Statoreinheit (8) wenigstens ein Sensorelement umfasst.

6. Mehrachsendrehkopf nach einem der vorgenannten Ansprüche **dadurch gekennzeichnet, dass** die Statoreinheit (8) im Bereich der Mantelfläche wenigstens einen Änschluss für ein Betriebsmedium aufweist.

7. Mehrachsendrehkopf nach einem der vorgenannten Ansprüche **dadurch gekennzeichnet, dass** das Betriebsmedium ein Kühlmedium ist.

8. Mehrachsendrehkopf nach einem der vorgenannten Ansprüche **dadurch gekennzeichnet, dass** die Statoreinheit (8) im Bereich der Mantelfläche (9) wenigstens einen elektrischen Anschluss aufweist.

9. Mehrachsendrehkopf nach einem der vorgenannten Ansprüche **dadurch gekennzeichnet, dass** die Statoreinheit (8) Mittel (10, 11) zu zentrischen Fixierung im Bezug zur zweiten Achse (D2) umfasst.

10. Mehrachsendrehkopf nach einem der vorgenannten Ansprüche **dadurch gekennzeichnet, dass** die Fixierungsmittel einen Verbindungsflansch (11) umfassen.

11. Mehrachsendrehkopf nach einem der vorgenannten Ansprüche **dadurch gekennzeichnet, dass** der Hohlraum (7) zur Aufnahme der Statoreinheit (8) eine axiale Anschlagfläche für den Anschlag der Statoreinheit (8) in axialer Richtung umfasst.

12. Mehrachsendrehkopf nach einem der vorgenannten Ansprüche **dadurch gekennzeichnet, dass** der Hohlraum (7) des Gabelarms (3, 4) eine Abstufung zum Formschluss mit den Fixierungsmitteln (11) der Statoreinheit (8) aufweist.

13. Mehrachsendrehkopf nach einem der vorgenannten Ansprüche **dadurch gekennzeichnet, dass** die Wandung des Hohlraums einen Durchlass für den Rotor (21) umfasst.

14. Mehrachsendrehkopf nach einem der vorgenannten Ansprüche **dadurch gekennzeichnet, dass** elektrische und/oder fluidführende Leitungen in dem freien Teilbereich (20) des Hohlraums (7) des Gabelarms (3, 4) neben der Statoreinheit (8) angeordnet sind.

## Claims

1. Multi-axis rotational head for a machine tool with a fork (2), which is arranged rotatably about a first axis (D1) and comprises two fork arms (3, 4), between which a motor spindle (6) is arranged rotatably about a second axis (D2), wherein at least one motor is provided for the rotary drive of the motor spindle (6) about the second axis (D2) in the fork and at least one fork arm (3) has a hollow chamber (7) for mounting the motor, **characterised in that** a stator unit (8) of the motor, which can be mounted separately from the fork arms (3, 4) and inserted into a part of the hollow chamber (7), is provided for the rotational drive about the second axis (D2), wherein the hollow chamber (7) of the fork arm (3) is shaped so that the stator unit (8) is accessible on at least one part of its circumferential-side casing surface (9) via the free portion (20) of the hollow chamber (7) located next to the stator unit (8).

2. Multi-axis rotational head according to claim 1, **characterised in that** the stator unit (8) has a housing (12) which is separate from the fork arm (3).

3. Multi-axis rotational head according to one of the preceding claims, **characterised in that** the stator unit (8) on the outer circumference has a joining surface (10) for joining to a corresponding surface of the hollow chamber wall.

4. Multi-axis rotational head according to one of the preceding claims, **characterised in that** the stator unit (8) comprises at least one cooling element (19).

5. Multi-axis rotational head according to one of the preceding claims, **characterised in that** the stator unit (8) comprises at least one sensor element.

6. Multi-axis rotational head according to one of the preceding claims, **characterised in that** the stator unit (8) in the region of the casing surface comprises at least one connection for an operating medium.

7. Multi-axis rotational head according to one of the preceding claims, **characterised in that** the operating medium is cooling medium.

8. Multi-axis rotational head according to one of the preceding claims, **characterised in that** the stator unit (8) in the region of the casing surface (9) has at least one electrical connection.

9. Multi-axis rotational head according to one of the preceding claims, **characterised in that** the stator unit (8) comprises means (10, 11 ) for securing centrally in relation to the second axis (D2).

10. Multi-axis rotational head according to one of the preceding claims, **characterised in that** the fixing means comprise a connecting flange (11).

11. Multi-axis rotational head according to one of the preceding claims, **characterised in that** the hollow chamber (7) for mounting the stator unit (8) comprises an axial stop surface for stopping the stator unit (8) in axial direction.

12. Multi-axis rotational head according to one of the preceding claims, **characterised in that** the hollow chamber (7) of the fork arm (3, 4) has a graduation for connecting positively with the fixing means (11) of the stator unit (8).

13. Multi-axis rotational head according to one of the preceding claims, **characterised in that** the wall of the hollow chamber comprises an opening for the rotor (21).

14. Multi-axis rotational head according to one of the preceding claims, **characterised in that** electric and/or filuid-guiding lines are arranged in the free portion (20) of the hollow chamber (7) of the fork arm (3, 4) next to the stator unit (8).

## Revendications

1. Tête rotative à plusieurs axes pour une machine-outil, comportant une fourche (2) qui est agencée de manière rotative autour d'un premier axe (D1) et présente deux bras de fourche (3, 4) entre lesquels est agencée en rotation autour d'un second axe (D2) une broche motorisée (6), au moins un moteur étant prévu pour l'entraînement en rotation de la broche motorisée (6) autour du second axe (D2) dans la fourche et au moins un bras de fourche (3) présentant un espace creux (7) destiné à loger le moteur,
**caractérisée en ce qu'**il est prévu une unité de stator (8) du moteur pour l'entraînement en rotation autour du second axe (D2), pouvant être montée séparément des bras de fourche (3, 4) et pouvant être installée dans une partie de l'espace creux (7), l'espace creux (7) du bras de fourche (3) étant formé de telle façon que l'unité de stator (8) est accessible sur au moins une partie de sa surface d'enveloppe périphérique (9) par l'intermédiaire de la zone partielle libre (20) de l'espace creux (7) située près de l'unité de stator (8).

2. Tête rotative à plusieurs axes selon la revendication 1,
**caractérisée en ce que** l'unité de stator (8) présente un carter (12) séparé du bras de fourche (3).

3. Tête rotative à plusieurs axes selon l'une des revendications précédentes,
**caractérisée en ce que** l'unité de stator (8) présente sur la périphérie extérieure une surface d'assemblage (10) pour l'assemblage sur une surface correspondante de la paroi d'espace creux.

4. Tête rotative à plusieurs axes selon l'une des revendications précédentes,
**caractérisée en ce que** l'unité de stator (8) comporte au moins un élément de refroidissement (19).

5. Tête rotative à plusieurs axes selon l'une des revendications précédentes,
**caractérisée en ce que** l'unité de stator (8) comporte au moins un élément de détection.

6. Tête rotative à plusieurs axes selon l'une des revendications précédentes,
**caractérisée en ce que** l'unité de stator (8) présente dans la zone de la surface d'enveloppe au moins un raccordement pour un fluide de travail.

7. Tête rotative à plusieurs axes selon l'une des revendications précédentes,
**caractérisée en ce que** le fluide de travail est un fluide de refroidissement.

8. Tête rotative à plusieurs axes selon l'une des revendications précédentes,
**caractérisée en ce que** l'unité de stator (8) présente dans la zone de la surface d'enveloppe (9) au moins un branchement électrique.

9. Tête rotative à plusieurs axes selon l'une des revendications précédentes,
**caractérisée en ce que** l'unité de stator (8) comporte des dispositifs (10, 11) destinés à la fixation centrée par rapport au second axe (D2).

10. Tête rotative à plusieurs axes selon l'une des revendications précédentes,
**caractérisée en ce que** les dispositifs de fixation comprennent une bride de fixation (11).

11. Tête rotative à plusieurs axes selon l'une des revendications précédentes,
**caractérisée en ce que** l'espace creux (7) destiné à recevoir l'unité de stator (8) comporte une surface de butée axiale pour arrêter l'unité de stator (8) dans le sens axial.

12. Tête rotative à plusieurs axes selon l'une des revendications précédentes,
**caractérisée en ce que** l'espace creux (7) du bras de fourche (3, 4) présente une gradation pour l'engagement positif avec les dispositifs de fixation (11) de l'unité de stator (8).

13. Tête rotative à plusieurs axes selon l'une des revendications précédentes,
**caractérisée en ce que** la paroi de l'espace creux comporte un passage pour le rotor (21).

14. Tête rotative à plusieurs axes selon l'une des revendications précédentes,
**caractérisée en ce que** les conduites électriques et/ou de fluide sont agencées dans la zone partielle libre (20) de l'espace creux (7) du bras de fourche (3, 4) près de l'unité de stator (8).
